# FASCICULE DE BREVET EUROPEEN

(11) **EP 0 628 750 B1**
(45) Date de publication et mention de la délivrance du brevet: **10.09.1997**
(21) Numéro de dépôt: 94401271.5
(22) Date de dépôt: 08.06.1994
(51) Int. Cl.: F16H 7/12, F16H 55/48

(54) **Dispositif de tendeur pour courroie**
Riemenspanneinrichtung
Belt tensioning device

(30) Priorité: 09.06.1993 FR 9306898
(43) Date de publication de la demande: 14.12.1994
(73) Titulaire: HUTCHINSON, F-75008 Paris (FR)
(72) Inventeur: Varin, Hervé, F-37510 Ballan (FR)
(74) Mandataire: Ramey, Daniel

(56) Documents cités:
- EP-A- 0 407 261
- WO-A-90/04730
- DE-A- 3 240 075
- DE-A- 3 724 963
- DE-U- 1 863 422
- PATENT ABSTRACTS OF JAPAN vol. 7, no. 68 (M-201) (1213) 19 Mars 1983 & JP-A-57 208 343 (YAMAHA HATSUDOKI)

## Description

L'invention est relative à un dispositif de tendeur pour courroie et notamment, mais sans qu'aucun caractère limitatif ne soit attaché à cette indication, un dispositif de tendeur pour courroie de distribution de moteur d'automobile.

On connaît déjà, dans de nombreuses réalisations, des dispositifs destinés à maintenir aussi constante que possible la tension d'une courroie de transmission de puissance et cela indépendamment, -pour un système cinématique donné-, de l'allongement naturel de la courroie au cours de son utilisation, des différences de cotes nominales d'une courroie à une autre, des variations de tension d'origine thermique et/ou mécanique, etc... Dans la plupart des tendeurs connus pour système cinématique de moteur d'automobile, de camion, de machine agricole ou analogue, des moyens sont prévus pour amortir des vibrations engendrées dans la courroie par les irrégularités cycliques du régime moteur, en particulier au ralenti ou lors des à-coups qui apparaissent à la mise en route et/ou à l'arrêt des appareillages solidaires des arbres menés qu'entraîne la courroie. La présence de ces moyens amortisseurs de vibrations accroît nécessairement le coût et la complexité des tendeurs qui sont alors d'un moindre intérêt pour des moteurs à relativement faible cylindrée, comme des moteurs à essence à quatre cylindres où la chaîne cinématique ne comporte que trois ou quatre arbres menés entraînés par la courroie.

Le document DE-A-3240075 décrit un dispositif tendeur pour courroie, comprenant une bague externe rigide fixée sur un arbre de rotation par l'intermédiaire d'un roulement et d'un anneau élastiquement déformable, par exemple en caoutchouc. En fonctionnement et sous l'effet de la pression appliquée par la courroie, cet anneau est comprimé dans sa partie recouverte par la courroie et étendu dans sa partie diamétralement opposée, chaque partie de l'anneau travaillant alternativement en compression et en tension avec une fréquence qui peut être relativement élevée et ayant donc une durée de vie relativement faible.

C'est un but général de l'invention de fournir un dispositif de tendeur pour courroie démuni de moyens d'amortissement spécifiques et, partant, d'un prix nettement plus faible que celui des dispositifs plus complexes mentionnés ci-dessus.

C'est également un but de l'invention de fournir un tel dispositif de faible encombrement, bien adapté à son utilisation avec une courroie de distribution de moteur d'automobile et dont le fonctionnement soit satisfaisant dans un large domaine de températures.

C'est aussi un but de l'invention de fournir un tel dispositif facile à mettre en oeuvre, qui garantisse une bonne stabilité de la tension de la courroie avec laquelle il coopère durant toute la durée de vie de ladite courroie et qui, même démuni de moyens spécifiques d'amortissement des vibrations, permette cependant un faible amortissement de ces dernières.

C'est, enfin, un but de l'invention de fournir un tel dispositif qui, lorsqu'il est mis en oeuvre dans le compartiment moteur d'une automobile, camion ou autre véhicule, contribue au confort des passagers, en particulier sur le plan acoustique en réduisant le niveau de bruit par rapport à celui des dispositifs antérieurs connus.

L'invention propose un dispositif de tendeur pour courroie comprenant un élément rotatif élastiquement déformable sur lequel passe la courroie, cet élément comprenant une bague rigide et un anneau de matériau élastomérique ou analogue co-axial à ladite bague, caractérisé en ce que l'anneau de matériau élastomérique est à l'extérieur de la bague rigide et constitue une jante externe déformable en compression destinée à venir en appui sur la courroie.

Dans une réalisation de l'invention, le dispositif comprend des moyens pour excentrer l'axe du roulement par rapport à un axe de montage du dispositif sur un support.

Dans les exécutions préférées du dispositif, lesdits moyens d'excentrage sont ménagés par un axe monté à ajustage serré dans la bague interne du roulement et formé avec un trou traversant d'axe parallèle à l'axe du roulement et excentré par rapport à ce dernier pour le passage d'un goujon de fixation et de verrouillage, -après mise en tension de la courroie-, sur le support.

Un matériau du type élastomérique ou analogue est de préférence un polymère à bonnes caractéristiques de résistance à la température et dont la déformation ne s'accompagne pas d'une absorption importante d'énergie.

Un tel matériau est avantageusement choisi parmi les caoutchoucs du type chloroprène, les EPDM ou les caoutchouc nitrile-bitadiène (HNBR).

Dans une réalisation préférée, l'anneau de matériau élastomérique est renforcé, sur sa surface extérieure, par un tissu qui améliore la tenue mécanique du dispositif en réduisant les frottements et en assurant une bonne répartition des contraintes.

En variante, la jante externe déformable est renforcée par une ou des armatures métallique(s).

L'invention sera mieux comprise par la description qui suit, faite à titre d'exemple et en référence au dessin annexé dans lequel :
- la figure 1 est une vue schématique en plan d'une chaîne cinématique comportant une première réalisation d'un tendeur pour courroie selon l'invention ;
- la figure 2 est une demi-vue en coupe selon la ligne II-II de la figure 1, mais sans la courroie ;
- la figure 3 est une vue en plan d'une variante du dispositif de tendeur montré sur les figures 1 et 2 ;
- la figure 3a est une vue d'encore une autre variante mais en coupe axiale.

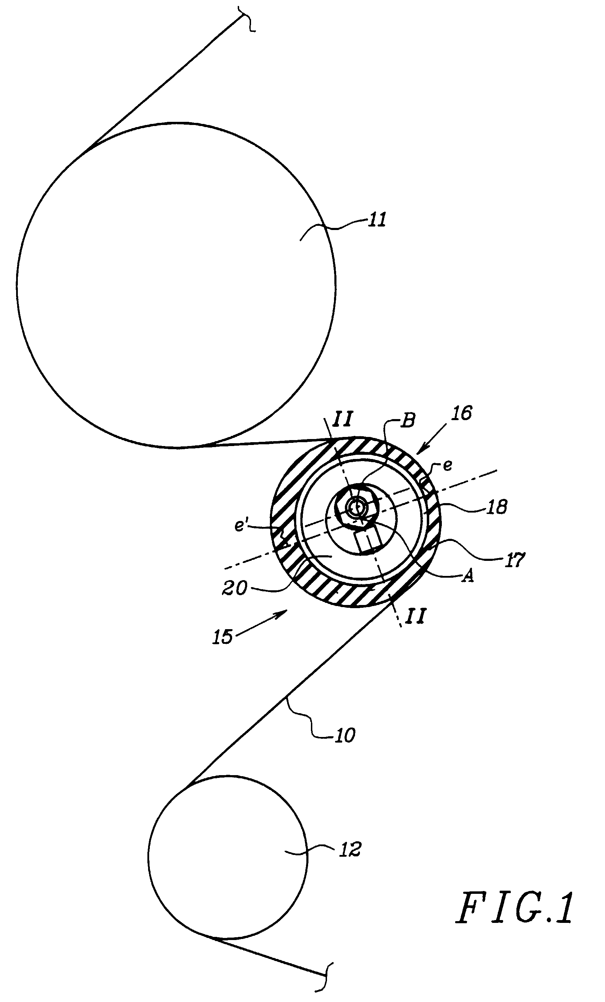

On se réfère d'abord à la figure 1 qui montre une partie d'un système cinématique à courroie de transmission par exemple, mais sans que cette indication ait quelque caractère limitatif que ce soit, un système de distribution de moteur d'automobile à essence à 4 cylindres et à 3 ou 4 arbres menés. Dans un tel système, où une courroie de distribution 10, très raide, coopère avec des poulies 11 et 12, les faibles débattements mis en jeu autorisent l'utilisation, pour le maintien de la stabilité de la tension de la courroie, d'un dispositif de tendeur 15 qui n'a pas besoin d'être muni de moyens spécifiques d'amortissement des vibrations, de sorte qu'il peut être de structure simple et, partant, de faible coût.

Dans une première forme de réalisation, le dispositif 15 comprend, pour l'application d'une force élastique sur la courroie 10, un élément rotatif 16 dont la jante externe 17 en contact tangentiel avec la courroie 10 est en un matériau du type élastomère ou analogue, par exemple, un caoutchouc chloroprène, EPDM ou HNBR, à bonnes caractéristiques de résistance à la température et dont la déformation ne s'accompagne pas d'une absorption importante d'énergie. La jante 17 est rendue solidaire par frettage, adhérisation ou analogue d'une bague métallique 18 elle-même fixée sur la bague externe 19 d'un roulement 20, d'axe A et dont la bague interne 21 est montée à ajustage serré sur un axe 22 percé d'un trou traversant 23 d'axe B parallèle à l'axe A et excentré par rapport à ce dernier. Dans le trou 23 est propre à être logé un goujon G de fixation et de verrouillage du dispositif 15 sur un support S du système cinématique.

Lorsque le verrouillage du dispositif 15 est effectué, -après mise en tension de la courroie-, cette tension est stabilisée pendant toute la durée de fonctionnement du système cinématique par la déformation élastique de la jante 17 dans sa zone de contact tangentiel avec la courroie 10, zone où elle subit une contrainte de compression, comme montré schématiquement sur la figure 1 où l'épaisseur e de la jante 17 dans la zone au contact de la courroie est inférieure à l'épaisseur e' de la jante dans une zone diamétralement opposée.

Complémentairement à sa simplicité, un dispositif selon l'invention constitue également, en raison de la présence du matériau de type élastomérique qui forme la jante externe, un filtre acoustique qui accroît le confort des passagers d'un véhicule dont la courroie de distribution du moteur est munie d'un tel dispositif, et cela en réduisant de façon notable le niveau de bruit par rapport à celui des dispositifs connus.

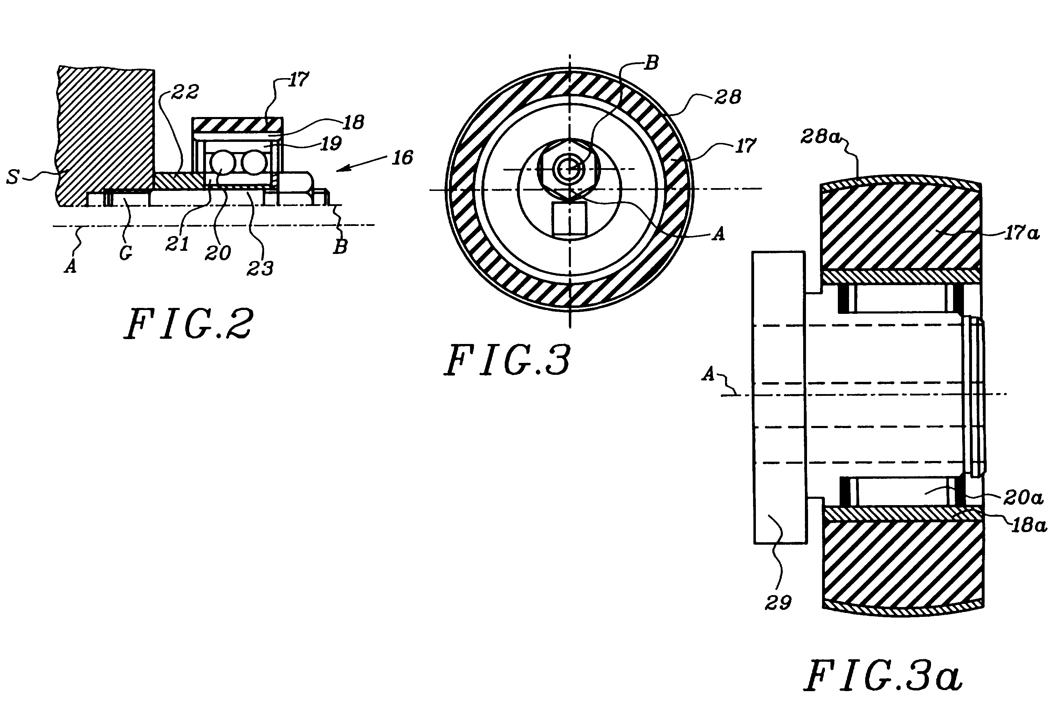

Dans la variante montrée sur la figure 3, la jante 17 est revêtue, sur sa surface extérieure, d'un renfort en tissu 28 lequel améliore la tenue mécanique en réduisant les frottements et en assurant une bonne répartition des contraintes.

La jante 17 peut également être munie d'un ou de renfort(s) métallique(s).

Dans encore une autre variante, figure 3a, une bague 18ₐ co-axiale au roulement 20ₐ d'axe A porte une jante 17ₐ en matériau du type élastomère ou analogue, lequel est revêtu sur sa surface extérieure d'un tissu 28ₐ. Dans cette réalisation, un dispositif d'excentrage 29 associé au roulement 20ₐ sert également à la fixation et au verrouillage, -après mise en tension de la courroie-, sur le support du système cinématique comprenant cette dernière.

L'invention prévoit, dans une variante non représentée, de réaliser l'anneau non pas d'une seule pièce, mais par la réunion de plusieurs anneaux avantageusement séparés par des armatures qui leur sont co-axiales, avec pour résultat une augmentation de la rigidité axiale du dispositif.

Dans un mode d'exécution, le ou les anneaux sont munis d'évidements pour encore diminuer le poids du dispositif.

Quelle que soit la forme de réalisation, la simplicité du dispositif, sa facilité de mise en place, son faible encombrement et son coût réduit, de même que ses avantages sur le plan acoustique autorisent l'association à un même système cinématique d'une pluralité de dispositifs, par exemple pour "casser" la longueur des brins libres de la courroie.

## Revendications

1. Dispositif de tendeur pour courroie, comprenant un élément rotatif (16) élastiquement déformable sur lequel passe la courroie (10), cet élément comprenant une bague rigide (18, 18a) et un anneau (17, 17a) de matériau élastomérique ou analogue co-axial à ladite bague, caractérisé en ce que l'anneau (17, 17a) de matériau élastomérique est à l'extérieur de la bague rigide (18, 18a) et constitue une jante externe déformable en compression destinée à venir en appui sur la courroie (10).

2. Dispositif selon la revendication 1, caractérisé en ce que l'anneau (17, 17a) de matériau élastomérique comprend un tissu (28, 28a) sur sa surface extérieure.

3. Dispositif selon la revendication 1 ou 2, caractérisé en ce que ladite bague rigide (18, 18a) est fixée sur la bague externe (19) d'un roulement (20, 20a).

4. Dispositif selon la revendication 3, caractérisé en ce qu'il comprend des moyens pour excentrer l'axe (A) du roulement (20, 20a) par rapport à un axe (B) de montage du dispositif sur un support.

5. Dispositif selon la revendication 4, caractérisé en ce que lesdits moyens d'excentrage comprennent un axe (22) monté à ajustage serré dans la bague interne (21) du roulement et formé avec un trou traversant (23) d'axe (B) parallèle à l'axe (A) du roulement et excentré par rapport à ce dernier pour le passage d'un goujon (G) de fixation et de verrouillage, - après mise en tension de la courroie -, sur le support (S).

6. Dispositif selon l'une des revendications précédentes, caractérisé en ce que le matériau du type élastomérique ou analogue est un polymère à bonnes caractéristiques de résistance à la température et dont la déformation ne s'accompagne pas d'une absorption importante d'énergie.

7. Dispositif selon l'une des revendications précédentes, caractérisé en ce que le matériau de type élastomérique ou analogue est choisi parmi les caoutchoucs chloroprène, les EPDM ou les caoutchoucs nitrile-butadiène (HNBR).

8. Dispositif selon l'une des revendications précédentes, caractérisé en ce que l'anneau de matériau élastomérique (17, 17a) est renforcé par une ou des armatures métalliques.

9. Dispositif selon l'une des revendications 1 à 7, caractérisé en ce qu'il comprend plusieurs anneaux co-axiaux de matériau élastomérique avec interposition entre ces anneaux d'armatures qui leur sont co-axiales.

10. Dispositif selon l'une des revendications précédentes, caractérisé en ce que le matériau de type élastomérique constitutif du ou des anneaux précités comprend des évidements qui en diminuent le poids.

## Patentansprüche

1. Spannvorrichtung für Riemen mit einem elastisch verformbaren drehbaren Element (16), über das der Riemen (10) läuft und das einen starren Ring (18, 18a) und einen zu diesem Ring koaxialen Ring (17, 17a) aus einem Elastomermaterial oder dergleichen aufweist,
dadurch gekennzeichnet,
daß der Ring (17, 17a) aus Elastomermaterial sich außerhalb des starren Rings (18, 18a) befindet und eine unter Kompression verformbare Außenfelge bildet, die dazu bestimmt ist, an dem Riemen (10) anzuliegen.

2. Vorrichtung nach Anspruch 1,
dadurch gekennzeichnet,
daß der Ring (17, 17a) aus Elastomermaterial an seiner Außenfläche ein Gewebe (28, 28a) aufweist.

3. Vorrichtung nach Anspruch 1 oder 2,
dadurch gekennzeichnet,
daß der starre Ring (18, 18a) auf dem Außenring (19) eines Wälzlagers (20, 20a) befestigt ist.

4. Vorrichtung nach Anspruch 3,
dadurch gekennzeichnet,
daß sie Einrichtungen aufweist, um die Achse (A) des Wälzlagers (20, 20a) bezüglich einer Achse (B), die zur Montage der Vorrichtung an einem Halter dient, exzentrisch anzuordnen.

5. Vorrichtung nach Anspruch 4,
dadurch gekennzeichnet,
daß diese Exzentereinrichtung eine Achse (22) aufweist, die in dem Innenring (21) des Wälzlagers mit Preßsitz angeordnet ist und die mit einem durchgehenden Loch (23) versehen ist, das eine zur Achse (A) des Wälzlagers parallele und bezüglich dieser exzentrische Achse (B) aufweist und zum Durchgang eines Bolzens (G) zur Befestigung und Verriegelung an dem Halter (S) - nach dem Spannen des Riemens - dient.

6. Vorrichtung nach einem der vorhergehenden Ansprüche,
dadurch gekennzeichnet,
daß das Material vom Typ Elastomer oder dergleichen ein Polymer mit guten Temperaturbeständigkeitseigenschaften ist, dessen Verformung nicht von einer starken Energieaufnahme begleitet ist.

7. Vorrichtung nach einem der vorhergehenden Ansprüche,
dadurch gekennzeichnet,
daß das Material vom Typ Elastomer oder dergleichen aus den Chloroprenkautschuken, den EPDM oder den Butadien-Nitril-Kautschuken (HNBR) ausgewählt ist.

8. Vorrichtung nach einem der vorhergehenden Ansprüche,
dadurch gekennzeichnet,
daß der Ring (17, 17a) aus Elastomermaterial durch eine oder mehrere Metalleinlagen verstärkt ist.

9. Vorrichtung nach einem der Ansprüche 1 bis 7,
dadurch gekennzeichnet,
daß sie mehrere zueinander koaxiale Ringe aus Elastomermaterial aufweist, zwischen denen zu ihnen koaxiale Einlagen vorgesehen sind.

10. Vorrichtung nach einem der vorhergehenden Ansprüche, dadurch gekennzeichnet,
daß das den oder die Ringe bildende Elastomermaterial Aussparungen aufweist, die sein Gewicht verringern.

## Claims

1. A belt tensioning device comprising an elastically deformable rotating element (16) over which the belt (10) passes, the said element comprising a rigid collar (18, 18a) and a ring (17, 17a) of elastomeric or like material coaxial with the said collar, characterised in that the ring (17, 17a) of elastomeric material is on the outside of the rigid collar (18, 18a) and constitutes an outer rim which is deformable in compression and which is intended to bear on the belt (10).

2. A device according to Claim 1, characterised in that the ring (18, 18a) of elastomeric material has a woven material (28, 28a) on its outer surface.

3. A device according to Claim 1 or 2, characterised in that the said rigid collar (18, 18a) is fixed on the outer collar (19) of a rolling bearing (20, 20a).

4. A device according to Claim 3, characterised in that it comprises means of throwing the axis (A) of the rolling bearing (20, 20a) off-centre in relation to a mounting axis (B) of the device on a carrier.

5. A device according to Claim 4, characterised in that the said off-centring means comprise a spindle (22) mounted to be a close fit in the inner collar (21) of the rolling bearing and formed with a through-bore (23) of axis (B) parallel with the axis (A) of the rolling bearing and off-centre in relation to this latter for passage of a pin (G) for fixing and locking on the carrier (S) once the belt has been tensioned.

6. A device according to one of the preceding Claims, characterised in that the material of the elastomeric or similar type is a polymer having good characteristics of resistance to temperature and the deformation of which is not accompanied by a substantial absorption of energy.

7. A device according to one of the preceding claims, characterised in that the material of elastomeric or like type is chosen from among the chloroprene rubbers, the EPDM's or the nitrile-butadene rubbers (HNBR).

8. A device according to one of the preceding Claims, characterised in that the ring of elastomeric material (17, 17a) is reinforced by one or more metallic inserts.

9. A device according to one of Claims 1 to 7, characterised in that it comprises a plurality of coaxial rings of elastomeric material with interposition of reinforcements between and coaxial with the said rings.

10. A device according to one of the preceding Claims, characterised in that the material of elastomeric type constituting the aforesaid ring or rings comprises voids to reduce weight.
